# EUROPEAN PATENT SPECIFICATION

(11) **EP 3 315 404 B1**
(45) Date of publication and mention of the grant of the patent: **07.08.2019**
(21) Application number: 16195570.3
(22) Date of filing: 25.10.2016
(51) Int. Cl.: B64C 37/00, B60F 5/02

(54) **CONFIGURABLE TAIL FOR FLYING CAR**
KONFIGURIERBARES HECK FÜR EIN FLIEGENDES FAHRZEUG
QUEUE CONFIGURABLE POUR VOITURE VOLANTE

(43) Date of publication of application: 02.05.2018
(73) Proprietor: AeroMobil R&D, s. r. o., 82106 Bratislava-mestska cast Podunajske Biskupice (SK)
(72) Inventor: MACANDREW, Doug, 841 06 Bratislava-Zahorska Bystrica (SK); ROOMS, Simon, 841 02 Bratislava (SK); GREN, Martin, 713 00 Ostrava (CZ)
(74) Representative: Finnegan Europe LLP

(56) References cited:
- CN-B- 102 774 493
- US-A- 4 537 373
- US-A1- 2011 042 507
- US-A1- 2013 157 541
- US-A1- 2015 102 155

## Description

### FIELD OF THE INVENTION

This invention relates to vehicles that are configurable for air use (flying) and road use (driving). Such vehicles are commonly known as flying cars or roadable aircraft (hereafter "flying cars"). In particular, the invention relates to a configurable tail unit that is capable of functioning as a rear bumper in road use.

### BACKGROUND

There have been a number of previous proposals for flying car designs, i.e. vehicles that can be fully complaint with legal and practical requirements for both road and flight use. Examples include the Terrafugia Transition (WO 2007/114877), the Carplane (http://carplane.de/), the AeroMobil (WO 2013/03240), and the Moller Skycar (http://moller.com/). The first three of these all include a propeller as the means of providing thrust in the flight configuration, in particular in a pusher arrangement.

In order to comply with regulatory requirements for use on public roads, it is common for vehicles to have to be provided with a rear bumper or fender (hereinafter "bumper"). Rear bumpers are intended to provide protection to both the vehicle and its occupants in the event of a rear collision, and limit damage or injury to other vehicles and pedestrians, such as during reversing or parking. Typical regulations specify the height of the bumper above the ground (usually a minimum height), the dimensions of the bumper, and its impact or deformability characteristics.

One problem with such requirements is that they can lead to increased drag or other reduced aerodynamic performance when the flying car is configured for flight. This invention is an attempt to reconcile the need for certain minimum physical dimensions and performance as a bumper for road use with the desire for reduced drag in flight. US 2011/042507 describes a convertible vehicle for road, air, and water usage. US 2015/102155 describes a road and air transport vehicle. US 4537373 describes air vehicles having driven wheels and ducted fans. CN102774493 describes variable wing type land, sea and air triphibian aircraft.

### SUMMARY

A first aspect of the invention provides a vehicle configurable for air or road use (a flying car), comprising a body having road wheels for supporting the body when configured for road use; wings connected to the body and deployable for air use; and a tail section at the rear of the body, comprising at least one horizontal tailplane; wherein the at least one horizontal tailplane includes a planar rearmost edge section that is pivotable about an axis transverse to the longitudinal axis of the vehicle between a first position in which the plane of the rearmost edge section is substantially horizontal, and a second position in which the plane of the rearmost edge section is substantially vertical.

The tailplane can comprise the rearmost edge section and a fixed horizontal section, wherein in the first position, the rearmost edge section is positioned adjacent the fixed horizontal section so as to lie in substantially the same horizontal plane, and in the second position is spaced rearwardly from the fixed horizontal section.

The axis about which the rearmost edge section pivots can be spaced from the plane of the horizontal tailplane.

The vehicle further comprises at least one vertical fin, a pivot point on the transverse axis being defined on the at least one fin, and a hinge connecting the rearmost edge section to the pivot point on the at least one fin. The vehicle comprises a pair of vertical fins, the horizontal tailplane extending between the fins, and a hinge being provided at each end of the rearmost edge section and connected to the pivot point on a respective fin. In this case, a road wheel can be located at a lower region of each of the pair of vertical fins. The vehicle can also comprise a central fin and a hinge connecting the rearmost edge section to the pivot point on the central fin.

A propeller can be mounted on the tail section. In this case, when in the second position, the substantially vertical plane of the rearmost edge section can be behind the propeller. The horizontal tailplane can be located below the mounting point of the propeller.

Where the vehicle comprises a biplane tailplane, the at least one horizontal tailplane can be a lower tailplane.

The rearmost edge section can be configured to act as a rear bumper when in the second position when the vehicle is configured for road use.

Further variations can be made within the scope of the invention.

### DRAWINGS

Figure 1 shows a front perspective view of a flying car in a flight configuration;
Figure 2 shows a front perspective view of a flying car in a road use configuration;
Figure 3 shows the tail section of the flying car of Figure 1; and
Figure 4 shows the tail section of the flying car of Figure 2.

### DETAILED DESCRIPTION

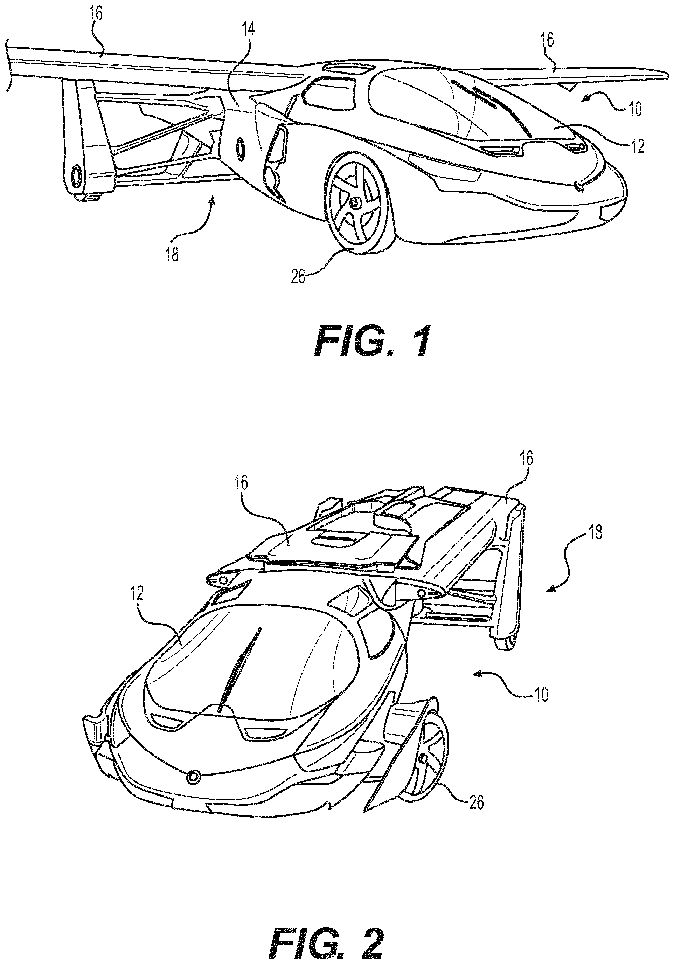

Referring to Figures 1 and 2, an aircraft comprising a convertible vehicle (a flying car) is shown, in a flight configuration (Figure 1) and a road use configuration (Figure 2). The flying car comprises a body structure 10 providing a crew compartment 12 and housing a motor (not shown) and propeller shaft (not shown) that extends from the motor to the rear 14 of the body structure 10, where the propeller is mounted as is described below. Wings 16 for providing lift and control (via ailerons, not shown) are mounted at the top of the body 10 immediately behind the crew compartment 12. The wings 16 can be moved between an extended position for flight use (Figure 1), and a folded position for road use (Figure 2). In the folded position, the wings lie along the top of the body 10, the long axis of the wings lying substantially parallel to the long axis of the body 10. The folding mechanism is substantially as described in WO 2013/03240.

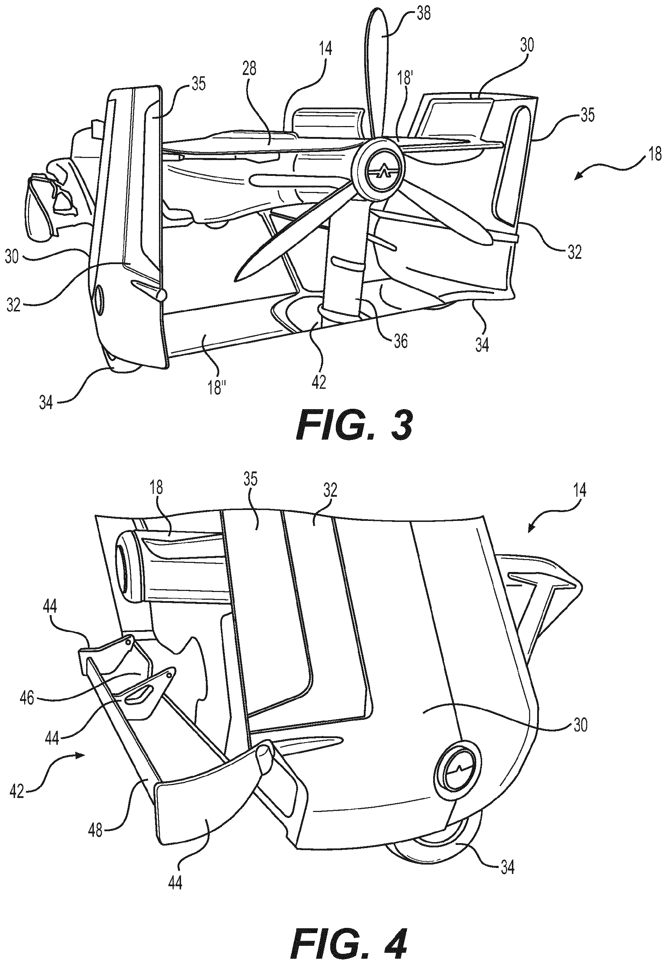

A tail structure 18 is located at the rear 14 of the body 10 as is described in further detail with reference to Figures 3 and 4.

Front wheels 26 are mounted on the body structure 10. The front wheels are both steerable and driven. In addition, the front wheels 26 can be moved between a retracted position (Figure 1) in which they are positioned close to the body to reduce drag in flight, and an open position (Figure 2) in which they are positioned for improved traction and control for road use.

Referring now to Figure 3, the tail structure 18 comprises a biplane tailplane 18', 18", the upper tailplane 18' being connected to the rear part of the body 14. Elevators 28 are provided on the upper plane 18' only. A pair of fins 30 are provided, each having a rudder 32, the tailplanes 18', 18" extending between the fins 30. Rear road wheels 34 are mounted at the lower part of each fin 30, and rear road light units 35 are provided in the training edge of each fin 30. A central fin 36 extends downwardly from the rear body part 14 to the lower tailplane 18". A propeller 38 is mounted on the rear body 14 immediate behind the trialing edge of the upper tailplane 18'.

The lower tailplane 18" has a two-part construction, comprising a fixed horizontal section 40, and a movable rearmost edge section 42. As shown in Figure 3, the rearmost edge section 42 is positioned adjacent to the fixed section 40 and lies in substantially the same horizontal plane. In this configuration, the lower tailplane 18" presents relatively low drag and can function to provide aerodynamic pitch stability.

Referring now to Figure 4, the rearmost edge section 42 is connected to pivot points on the fins 32, 36 by hinged support arms 44, which are hinged to the fins 32, 36 above the plane of the lower tailplane 18". An actuator 46 is connected between the central fin 36 and the associated support arm 44.

Operation of the actuator 46 causes the rearmost edge section 42 to pivot up around the pivot points until it lies in a substantially vertical plane as shown in Figure 4. The lower surface 48 of the rearmost edge section is now presented to the rear and can act as a bumper when the vehicle is configured for road use. The length of the arms 44 is such that the lower surface is positioned behind the propeller, i.e. is the rearmost extent of the vehicle, and is at a suitable height to meet road use regulatory requirements. The process is reversed to return the vehicle to flight configuration.

## Claims

1. A vehicle configurable for air or road use, comprising:
a body (10) having road wheels (26) for supporting the body when configured for road use; wings (16) connected to the body and deployable for air use; and
a tail section (18) at the rear (14) of the body (10), comprising at least one horizontal tailplane (18', 18");
wherein the at least one horizontal tailplane includes a planar rearmost edge section (42) that is pivotable about an axis transverse to the longitudinal axis of the vehicle between a first position in which the plane of the rearmost edge section is substantially horizontal, and a second position in which the plane of the rearmost edge section is substantially vertical;
**characterised in that**
the vehicle further comprises at least a pair of vertical fins (30, 32), a pivot point on the transverse axis being defined on at least one fin, the horizontal tailplane extending between the fins;
and a hinge being provided at each end of the rearmost edge section and connected to the pivot point on a respective fin.

2. A vehicle as claimed in claim 1, wherein the tailplane comprises the rearmost edge section and a fixed horizontal section, wherein in the first position, the rearmost edge section is positioned adjacent the fixed horizontal section so as to lie in substantially the same horizontal plane, and in the second position is spaced rearwardly from the fixed horizontal section.

3. A vehicle as claimed in claim 1 or 2, wherein the axis about which the rearmost edge section pivots is spaced from the plane of the horizontal tailplane.

4. A vehicle as claimed in any preceding claim , wherein a road wheel (34) is located at a lower region of each of the pair of vertical fins.

5. A vehicle as claimed in any preceding claim, comprising a central fin (36) and a hinge connecting the rearmost edge section to the pivot point on the central fin (36).

6. A vehicle as claimed in any preceding claim, further comprising a propeller (38) mounted on the tail section.

7. A vehicle as claimed in claim 6, wherein, when in the second position, the substantially vertical plane of the rearmost edge section is behind the propeller (38).

8. A vehicle as claimed in claim 7, wherein the horizontal tailplane is located below the mounting point of the propeller (38).

9. A vehicle as claimed in any preceding claim, wherein the rearmost edge section is configured to act as a rear bumper when in the second position when the vehicle is configured for road use.

## Patentansprüche

1. Ein Fahrzeug, das für Luft- oder Straßennutzung konfigurierbar ist, das Folgendes beinhaltet:
einen Körper (10), der Straßenräder (26) zum Tragen des Körpers aufweist, wenn dieser für Straßennutzung konfiguriert ist;
Flügel (16), die mit dem Körper verbunden und für Luftnutzung einsetzbar sind;
und einen Heckabschnitt (18) an der Rückseite (14) des Körpers (10), der mindestens ein horizontales Höhenleitwerk (18', 18") beinhaltet;
wobei das mindestens eine horizontale Höhenleitwerk einen ebenen hintersten Kantenabschnitt (42) umfasst, der um eine quer zu der Längsachse des Fahrzeugs liegenden Achse zwischen einer ersten Position, in der die Ebene des hintersten Kantenabschnitts im Wesentlichen horizontal ist, und einer zweiten Position, in der die Ebene des hintersten Kantenabschnitts im Wesentlichen vertikal ist, drehbar ist;
**dadurch gekennzeichnet, dass** das Fahrzeug ferner Folgendes beinhaltet: mindestens ein Paar von vertikalen Flossen (30, 32), einen Drehpunkt auf der Querachse, der auf mindestens einer Flosse definiert ist, wobei sich das horizontale Höhenleitwerk zwischen den Flossen erstreckt;
und einen Drehteil, der an jedem Ende des hintersten Kantenabschnitts bereitgestellt und mit dem Drehpunkt auf einer jeweiligen Flosse verbunden ist.

2. Ein Fahrzeug gemäß Anspruch 1, wobei das Höhenleitwerk den hintersten Kantenabschnitt und einen festen horizontalen Abschnitt beinhaltet, wobei in der ersten Position der hinterste Kantenabschnitt neben dem festen horizontalen Abschnitt positioniert ist, um so im Wesentlichen in der gleichen horizontalen Ebene zu liegen, und in der zweiten Position von dem festen horizontalen Abschnitt rückwärts beabstandet ist.

3. Ein Fahrzeug gemäß Anspruch 1 oder 2, wobei die Achse, um die sich der hinterste Kantenabschnitt dreht, von der Ebene des horizontalen Höhenleitwerks beabstandet ist.

4. Ein Fahrzeug gemäß einem vorhergehenden Anspruch, wobei sich ein Straßenrad (34) in einer unteren Region von jeder des Paars von vertikalen Flossen befindet.

5. Ein Fahrzeug gemäß einem vorhergehenden Anspruch, das eine mittige Flosse (36) und einen Drehteil beinhaltet, der den hintersten Kantenabschnitt mit dem Drehpunkt auf der mittigen Flosse (36) verbindet.

6. Ein Fahrzeug gemäß einem vorhergehenden Anspruch, das ferner einen Propeller (38) beinhaltet, der auf dem Heckabschnitt montiert ist.

7. Ein Fahrzeug gemäß Anspruch 6, wobei, wenn in der zweiten Position, die im Wesentlichen vertikale Ebene des hintersten Kantenabschnitts hinter dem Propeller (38) liegt.

8. Ein Fahrzeug gemäß Anspruch 7, wobei sich das horizontale Höhenleitwerk unterhalb des Befestigungspunkts des Propellers (38) befindet.

9. Ein Fahrzeug gemäß einem vorhergehenden Anspruch, wobei der hinterste Kantenabschnitt konfiguriert ist, um als hintere Stoßstange zu wirken, wenn in der zweiten Position, wenn das Fahrzeug für Straßennutzung konfiguriert ist.

## Revendications

1. Véhicule configurable pour une utilisation aérienne ou routière, comprenant :
un corps (10) possédant des roues (26) pour route destinées à supporter le corps lorsqu'il est dans la configuration destinée à une utilisation sur route ;
des ailes (16) reliées au corps et déployables destinées à une utilisation aérienne ;
et une partie queue (18) à l'arrière (14) du corps (10), comprenant au moins un empennage horizontal (18', 18") ;
ledit au moins un empennage horizontal comprenant une partie de bord la plus à l'arrière plane (42) pouvant pivoter autour d'un axe transversal par rapport à l'axe longitudinal du véhicule entre une première position dans laquelle le plan de la partie de bord la plus à l'arrière est sensiblement horizontal, et une seconde position dans laquelle le plan de la partie de bord la plus à l'arrière est sensiblement vertical ;
**caractérisé en ce que** le véhicule comprend en outre au moins une paire d'ailettes verticales (30, 32), un point de pivot sur l'axe transversal étant défini sur au moins une ailette, l'empennage horizontal s'étendant entre les ailettes :
et une charnière étant disposée au niveau de chaque extrémité de la partie de bord la plus à l'arrière et reliée au point de pivot sur une ailette respective.

2. Véhicule selon la revendication 1, ledit empennage comprenant la partie de bord la plus à l'arrière et une partie horizontale fixe, dans la première position, ladite partie de bord la plus à l'arrière étant positionnée adjacente à la partie horizontale fixe de façon à se trouver sensiblement dans le même plan horizontal et dans la seconde position étant espacée vers l'arrière à partir de la partie horizontale fixe.

3. Véhicule selon la revendication 1 ou 2, ledit axe autour duquel pivote la partie de bord la plus à l'arrière étant espacé du plan de l'empennage horizontal.

4. Véhicule selon l'une quelconque des revendications précédentes, une roue (34) pour route étant située dans une zone inférieure de chaque ailette verticale de la paire d'ailettes verticales.

5. Véhicule selon l'une quelconque des revendications précédentes, comprenant une ailette centrale (36) et une charnière reliant la partie de bord la plus à l'arrière au point de pivot de l'ailette centrale (36).

6. Véhicule selon l'une quelconque des revendications précédentes, comprenant en outre une hélice (38) montée sur la partie empennage.

7. Véhicule selon la revendication 6, dans la seconde position, le plan sensiblement vertical de la partie de bord la plus à l'arrière étant derrière l'hélice (38).

8. Véhicule selon la revendication 7, ledit empennage horizontal étant situé sous le point de montage de l'hélice (38).

9. Véhicule selon l'une quelconque des revendications précédentes, ladite partie de bord la plus à l'arrière étant conçue pour agir en tant que pare-chocs arrière lorsqu'elle est dans la seconde position lorsque le véhicule est dans la configuration destinée à une utilisation routière.
